# EUROPEAN PATENT SPECIFICATION

(11) **EP 1 698 668 B1**
(45) Date of publication and mention of the grant of the patent: **23.05.2012**
(21) Application number: 06251095.3
(22) Date of filing: 01.03.2006
(51) Int. Cl.: C08L 83/04, C08K 3/36, C08K 5/54, C09D 183/04

(54) **Room temperature curable organopolysiloxane compositions**
Bei Umgebungstemperatur härtende Organopolysiloxanzusammensetzungen
Compositions d'organopolysiloxane durcissables à température ambiante

(30) Priority: 01.03.2005 JP 2005056655
(43) Date of publication of application: 06.09.2006
(73) Proprietor: Shin-Etsu Chemical Co., Ltd., Tokyo (JP)
(72) Inventor: Sakamoto, Takafumi, Shin-Etsu Chemical Co., Ltd., Gunma-ken (JP)
(74) Representative: Stoner, Gerard Patrick

(56) References cited:
- EP-A- 1 281 735
- GB-A- 2 001 303
- US-A- 5 395 605
- US-B1- 6 451 437
- "STANDARD TEST METHOD FOR CARBON BLACK - CTAB (CETYLTRIMETHYLAMMONIUM BROMIDE) SURFACE AREA" ANNUAL BOOK OF ASTM STANDARDS, PHILADELPHIA, PA, US, no. D3765-95A, 1995, pages 595-599, XP000650233 ISSN: 0192-2998

## Description

This invention relates to room temperature curable organopolysiloxane compositions loaded with wet silica, and more particularly, to room temperature curable organopolysiloxane compositions which are useful in coating applications.

### BACKGROUND

Known in the art are a variety of room temperature-vulcanizable (RTV) organopolysiloxane compositions which cure into silicone rubbers at room temperature. Rubbers resulting from such RTV compositions have improved weather resistance, durability, heat resistance and freeze resistance as compared with other organic rubbers and are thus used in a wide variety of fields. Especially in the building field, RTV compositions are often used for the bonding of glass plates, the bonding of metal and glass, the sealing of concrete joints and the like. Recently, RTV compositions newly find wide use as coating compound for buildings, plants, water conduits (inclusive of inner and outer surfaces) and the like.

The compositions intended for use in coating applications should have an appropriate fluidity prior to use. Although silica fillers are often used in such compositions for the purpose of improving mechanical strength, the amount of fillers loaded must be limited in order to retain an appropriate fluidity. Also, if silica is loaded without pretreatment, a viscosity build-up phenomenon or crepe hardening phenomenon due to free hydroxyl groups on the silica surface will occur with the lapse of time. Compositions having a certain fluidity have a tendency that fillers will settle down and/or separate apart with the lapse of time.

One well-known solution to these problems is to introduce a heat treatment step during the manufacture so that the fillers may become compatible with the silicone polymer. The addition of a heat treatment step, however, can cause a drop of manufacture efficiency.

A number of research works have been made on the surface modification of silica fillers. Known methods include treatment with cyclic siloxane as disclosed in US-A-2,938,009, simultaneous treatment of fillers with a monoalkoxysilane and a primary organic amine compound as disclosed in US-A- 3,024,126, and treatment with ammonia or its derivative and subsequent treatment with a silazane compound as disclosed in US-A- 3,635,743. Also known are simultaneous treatment with three components: hydroxylamine, cyclic siloxane and silyl nitrogen compound as disclosed in JP-A 49-98861; in-process treatment of silica filler with a siloxane polymer, a monosilanol and a silazane compound and in-process treatment of silica filler with a siloxane polymer and an amino group-containing silicon compound as disclosed in JP-B-3029537 (US-A-6451437).

Specifically, US-A-6451437 describes condensation-curable organopolysiloxane compositions, especially coating compositions such as anti-fouling paint, containing both hydrophilic silica and hydrophobic silica. The siloxane is terminated with OH or hydrolysable terminal groups. Wet hydrophilic) silicas with adsorbed water content from 4 to 8%, primary particle diameter of 10 to 30 µm and BET surface area of at least 10 m²/g, preferably 50 to 800 m²/g, are contemplated. A hydrolysable organosilane is included for curing. In the mixture of hydrophobic and hydrophilic silicas, at least the hydrophilic silica is heat-treated together with part or all of the organopolysiloxane. The amount of silica mixture is from 1 to 100 parts by weight, preferably 2 to 50 parts per weight per 100 parts by weight of the organopolysiloxane. The weight proportion of hydrophobic to hydrophilic silica may be from 1:99 to 99:1, preferably 30:70 to 70:30.

Known methods for the prevention of settling or separation include the addition of an anti-settling agent and the use of a special additive like the condensation product of D-sorbitol and benzaldehyde as disclosed in JP-B-2946104.

While a number of research works have been made on the surface modification of silica fillers and the selection of additives for the purpose of restraining a change with time of the viscosity of such compositions, and preventing fillers from settling down or separating, special treatments, the use of additives, and heat treatment during manufacture are economically disadvantageous. A further improvement is thus desired.

Wet silica is inexpensive as compared with fumed silica. High water content, however, makes it difficult in a substantial sense to use wet silica in RTV organopolysiloxane compositions utilizing hydrolytic condensation reaction unless heat treatment is performed beforehand.

US-A-5395605, EP-A-1281735 and GB-A-2001303 describe precipitated (wet) silicas with low water uptake and high surface area, e.g. BET surface area 100 to 350 m²/g, CTAB surface area 100 to 350 m²/g and water uptake of ≤ 4.5% in US 5395605. Here, water uptake represents the amount of water adsorbed by a sample of the silica under conditions of given relative humidity.

Aims addressed herein include the provision of new and useful RTV organopolysiloxane compositions exploiting wet silica, methods of making them and their use.

Particular preferences are to maintain appropriate fluidity, and prevent filler from settling down or separating, without requiring special treatment and additives.

The inventors have identified particular types of wet silica whose use enables formulation of an RTV organopolysiloxane composition which maintains an appropriate fluidity and reduces or avoids settling or separation of the filler. We find that this can be done without a need for chemical treatment of the silica filler, additives, or compatibilising heat treatment.

Accordingly the present invention as defined in claim 1 provides a room temperature curable organopolysiloxane composition comprising
(A) 100 parts by weight of diorganopolysiloxane having at least two silicon-bonded hydroxyl or hydrolysable groups in a molecule,
(B) 0.5 to 30 parts by weight of silane having at least two hydrolysable groups in a molecule and/or a partial hydrolytic condensate thereof, and
(C) 0.5 to 300 parts by weight of wet silica having a BET specific surface area of at least 50 m²/g, a BET specific surface area to CTAB specific surface area ratio of 1.0 to 1.3, and a water content (as defined herein) of up to 4% by weight.

A method of making an RTV organopolysiloxane composition by combination of (A), (B), (C) as defined above, or in accordance with any preference or option set out below, is a further aspect of the invention (claim 7). Omitting one, two or all three of the above filler-compatibilising measures is a preferred option.

### BENEFITS

The RTV organopolysiloxane composition of the invention comprising a wet silica filler of choice maintains an appropriate fluidity and prevents the filler from settling down or separating without a need for special surface treatment of the silica filler, addition of any special additive, and heat treatment during manufacture.

### FURTHER EXPLANATIONS; OPTIONS AND PREFERENCES

### Component A

The diorganopolysiloxane serving as component (A) is a base polymer in the RTV organopolysiloxane composition of the invention. The diorganopolysiloxane has at least two silicon atom-bonded hydroxyl or hydrolyzable groups in a molecule. Preferred are diorganopolysiloxanes capped with hydroxyl or hydrolyzable groups at opposite ends of their molecular chain, e.g. as in by the following general formulae (1) and (2). 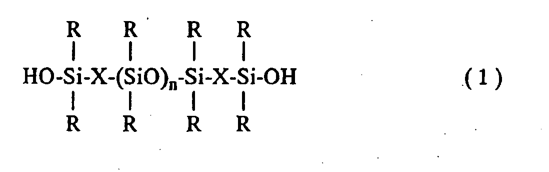 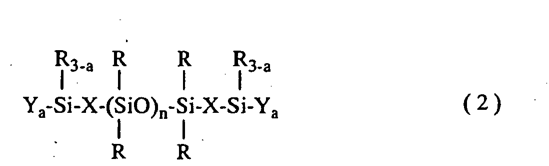 Herein R is independently a substituted or unsubstituted monovalent hydrocarbon group, X is independently an oxygen atom or a divalent hydrocarbon group of 1 to 8 carbon atoms, Y is independently a hydrolyzable group, n is such a number that the diorganopolysiloxane has a viscosity of 20 to 1,000,000 mm²/s at 25°C, and "a" is 2 or 3.

Suitable substituted or unsubstituted monovalent hydrocarbon groups represented by R include alkyl groups such as methyl, ethyl, propyl, butyl, pentyl, hexyl, heptyl, octyl, nonyl, decyl and octadecyl; cycloalkyl groups such as cyclopentyl and cyclohexyl; alkenyl groups such as vinyl, allyl, butenyl, pentenyl and hexenyl; aryl groups such as phenyl, tolyl, xylyl and α- and β-naphthyl; aralkyl groups such as benzyl, 2-phenylethyl and 3-phenylpropyl; and substituted forms of the foregoing groups in which some or all hydrogen atoms are substituted by halogen atoms (e.g., F, Cl and Br) or cyano groups, such as 3-chloropropyl, 3,3,3-trifluoropropyl and 2-cyanoethyl. Of these, preferred substituent groups are methyl, ethyl and phenyl, with methyl being most preferred.

X is an oxygen atom or a divalent hydrocarbon group of 1 to 8 carbon atoms. Suitable divalent hydrocarbon groups are of the formula: -(CH₂)ₘ- wherein m is an integer of 1 to 8. Of these, oxygen atom and -CH₂CH₂- are preferred.

Y is a hydrolyzable group other than hydroxyl group, situated at the end of the molecular chain of the diorganopolysiloxane. Examples of suitable hydrolyzable group include alkoxy groups such as methoxy, ethoxy and propoxy; alkoxyalkoxy groups such as methoxyethoxy, ethoxyethoxy and methoxypropoxy; acyloxy groups such as acetoxy, octanoyloxy and benzoyloxy; alkenyloxy groups such as vinyloxy, isopropenyloxy and 1-ethyl-2-methylvinyloxy; ketoxime groups such as dimethylketoxime, methylethylketoxime and diethylketoxime; amino groups such as dimethylamino, diethylamino, butylamino and cyclohexylamino; aminoxy groups such as dimethylaminoxy and diethylaminoxy; and amide groups such as N-methylacetamide, N-ethylacetamide and N-methylbenzamide. Of these, alkoxy groups are preferred.

The diorganopolysiloxane (A) should preferably have a viscosity at 25°C of 100 to 1,000,000 mm²/s, more preferably 300 to 500,000 mm²/s, even more preferably 500 to 100,000 mm²/s, most preferably 1,000 to 50,000 mm²/s. If the diorganopolysiloxane has a viscosity of less than 100 mm²/s at 25°C, it may become difficult to form a coating having good physical and mechanical strength. If the diorganopolysiloxane has a viscosity of more than 1,000,000 mm²/s at 25°C, the composition may have too high a viscosity to process on use. It is noted that the viscosity is as measured at 25°C by a rotational viscometer.

Illustrative, non-limiting examples of the diorganopolysiloxane (A) are given below. 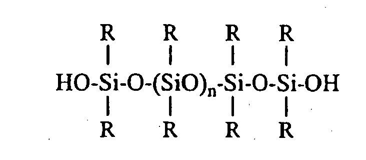 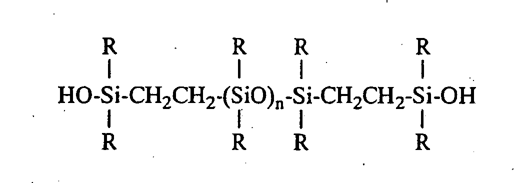 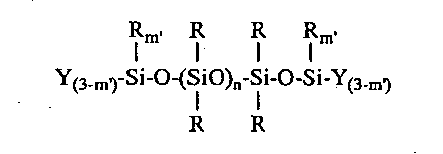 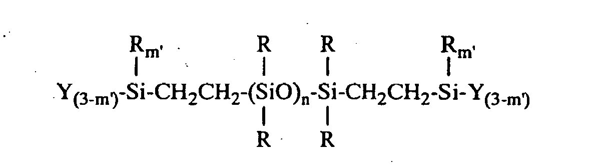 Herein, R, Y and n are as defined above, and m' is 0 or 1.

The diorganopolysiloxanes as component (A) may be used alone or in combinations of two or more members having different structure or molecular weight.

### Component B

Component (B) is a silane and/or a partial hydrolytic condensate thereof. It is essential for curing the inventive composition. The silane should have at least two hydrolyzable groups bonded to silicon atoms in a molecule. Preferred are silanes of the general formula (3) and/or partial hydrolytic condensates thereof.

R¹_{b}SiZ_{4-b} (3)

Herein R¹ is each independently a substituted or unsubstituted monovalent hydrocarbon group of 1 to 6 carbon atoms, Z is each independently a hydrolyzable group, and b is an integer of 0 to 2.

Examples of the hydrolyzable group represented by Z are as exemplified for the hydrolyzable group Y, other than hydroxyl group, situated at ends of the molecular chain of diorganopolysiloxane (A). For Z, alkoxy, ketoxime and isopropenoxy groups are preferred.

No particular limits are imposed on the silane and/or partial hydrolytic condensate as component (B) as long as it has at least two hydrolyzable groups in a molecule. Preferably, at least three hydrolyzable groups are contained in a molecule. A group other than the hydrolyzable group may be bonded to a silicon atom. The molecular structure may be either a silane or siloxane structure. In particular, the siloxane structure may be either straight, branched or cyclic.

The groups other than the hydrolyzable group, i.e., groups of R¹ are substituted or unsubstituted monovalent hydrocarbon groups of 1 to 6 carbon atoms, examples of which include alkyl groups such as methyl, ethyl, propyl, butyl, pentyl and hexyl; cycloalkyl groups such as cyclopentyl and cyclohexyl; aryl groups such as phenyl and tolyl; aralkyl groups such as benzyl and 2-phenylethyl; alkenyl groups such as vinyl, allyl, butenyl, pentenyl and hexenyl; and halogenated alkyl groups such as 3-chloropropyl and 3,3,3-trifluoropropyl. Of these, methyl, ethyl, phenyl and vinyl are preferred.

Illustrative, non-limiting examples of the organosilicon compound (B) include ethyl silicate, propyl silicate, methyltrimethoxysilane, methyltriethoxysilane, vinyltrimethoxysilane, vinyltriethoxysilane, methyltris(methoxyethoxy)silane, vinyltris(methoxyethoxy)silane, methyltripropenoxysilane, methyltriacetoxysilane, vinyltriacetoxysilane, methyltri(methylethylketoxime)silane, vinyltri(methylethylketoxime)silane, phenyltri(methylethylketoxime)silane, propyltri(methylethylketoxime)silane, tetra(methylethylketoxime)silane, 3,3,3-trifluoropropyltri(methylethylketoxime)silane, 3-chloropropyltri(methylethylketoxime)silane, methyltri(dimethylketoxime)silane, methyltri(diethylketoxime)silane, methyltri(methylisopropylketoxime)silane, tri(cyclohexanoxime)silane, and partial hydrolytic condensates thereof. They may be used alone or in combination of two or more.

An appropriate amount of component (B) compounded is 0.5 to 30 parts by weight, more preferably 1 to 20 parts by weight per 100 parts by weight of component (A). Less than 0.5 pbw of component (B) may lead to insufficient crosslinking whereas more than 30 pbw of component (B) may result in a cured composition which is too hard and be uneconomical.

### Component C

Component (C) is a wet silica having a BET specific surface area of at least 50 m²/g, preferably at least 75 m²/g, more preferably 100 to 400 m²/g, a ratio of BET specific surface area to CTAB specific surface area in the range of 1.0 to 1.3, preferably 1.0 to 1.2, more preferably 1.0 to 1.1, and a water content of up to 4%, preferably up to 3% by weight.

Silica with a BET specific surface area of less than 50 m²/g fails to impart mechanical strength. If the BET/CTAB specific surface area ratio is outside the range of 1.0 to 1.3, or if the water content is more than 4%, the composition will thicken or gel with the passage of time.

As used herein, the BET specific surface area is a specific surface area as measured by the BET method in terms of a nitrogen adsorption amount, and the CTAB specific surface area refers to a specific surface area as measured in terms of an adsorption amount of N-cetyl-N,N,N-trimethylammonium bromide. The BET and CTAB parameters and the corresponding tests are well-known. As the BET/CTAB specific surface area ratio approaches 1, the silica contains less pores in the interior, indicating a structure that adsorbs little water within internal pores. This suggests ease of water removal even when silica's apparent water content is high.

Such wet silicas which can be used as component (C) are commercially available, for example, as Siloa 72X from Rhodia. The water content may be adjusted by holding wet silica in a dryer or the like simple means.

An appropriate amount of wet silica (C) compounded is 0.5 to 300 parts by weight, more preferably 1 to 200 parts by weight, even more preferably 3 to 100 parts by weight, per 100 parts by weight of component (A). Less than 0.5 pbw of wet silica fails to achieve reinforcement whereas more than 300 pbw of wet silica results in a composition having a high viscosity and low mechanical strength.

### Other components

In the inventive RTV organopolysiloxane composition, catalysts may be added for promoting cure. Use may be made of various curing catalysts commonly used in conventional RTV organopolysiloxane compositions. Exemplary catalysts include metal salts of organocarboxylic acids such as lead 2-ethyloctoate, dibutyltin dioctoate, dibutyltin acetate, dibutyltin dilaurate, butyltin 2-ethylhexoate, iron 2-ethylhexoate, cobalt 2-ethylhexoate, manganese 2-ethylhexoate, zinc 2-ethylhexoate, stannous caprylate, tin naphthenate, tin oleate, tin butanoate, titanium naphthenate, zinc naphthenate, cobalt naphthenate, and zinc stearate; organotitanic acid esters such as tetrabutyl titanate, tetra-2-ethylhexyl titanate, triethanolamine titanate and tetra(isopropenyloxy)titanate; organotitanium compounds such as organosiloxytitanium and β-carbonyltitanium; alkoxyaluminum compounds; aminoalkyl-substituted alkoxysilanes such as 3-aminopropyltriethoxysilane and N-(trimethoxysilylpropyl)ethylenediamine; amine compounds and salts thereof such as hexylamine and dodecylamine phosphate; quaternary ammonium salts such as benzyltriethylammonium acetate; alkali metal salts of lower fatty acids such as potassium acetate, sodium acetate and lithium bromate; dialkylhydroxylamines such as dimethylhydroxylamine and diethylhydroxylamine; and guanidine compounds and guanidyl group-containing silanes or siloxanes as represented by the following formulae. 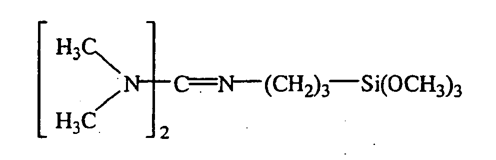 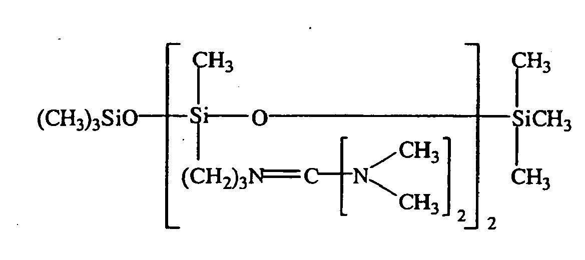 These catalysts may be used alone or in admixture.

When used, the amount of the curing catalyst is not particularly limited. It may be used in a catalytic amount. Typically, the catalyst is preferably used in an amount of 0.01 to 20 parts by weight, more preferably 0.1 to 10 parts by weight per 100 parts by weight of component (A). If the amount of the catalyst, when used, is below the range, the resulting composition may become less curable depending on the type of crosslinking agent. If the amount of the catalyst is above the range, the resulting composition may become less storage stable.

For the reinforcement or extending purpose, fillers other than component (C) may be used in the inventive composition. Suitable fillers include hydrophilic silica such as fumed silica and precipitated silica (other than component (C)), hydrophobic silica obtained by surface treatment of the foregoing silica with hexamethyldisilazane, cyclic dimethylsiloxane or the like, quartz, diatomaceous earth, titanium oxide, aluminum oxide, lead oxide, iron oxide, carbon black, bentonite, graphite, calcium carbonate, calcium silicate, silica zeolite, mica, clay, glass beads, glass microballoons, shirasu balloons, glass fibers, polyvinyl chloride beads, polystyrene beads, and acrylic beads. Of these, calcium carbonate, calcium silicate, silica zeolite, and hydrophilic silica having a BET specific surface area of at least 10 m²/g, especially 50 to 400 m²/g are preferred.

The amount of the other filler compounded may be selected depending on the purpose and the type of filler. Often the amount of filler is preferably 1 to 300 parts by weight, especially 3 to 100 parts by weight per 100 parts by weight of component (A).

In the inventive composition, optional additives may be compounded in ordinary amounts as long as the objects of the invention are not compromised. Suitable additives include plasticizers, colorants such as pigments, flame retardants, thixotropic agents, bactericides, fungicides, and adhesion improvers such as carbon-functional silanes having amino, epoxy or thiol groups (e.g., γ-glycidoxypropyltrimethoxysilane and aminopropyltriethoxysilane).

The RTV organopolysiloxane composition of the invention may be prepared by kneading components (A) to (C) and optional components in a well-known mixer such as a planetary mixer or kneader. One preferred procedure involves premixing components (A) and (C) and compounding component (B) in the mixture, and another preferred procedure involves premixing components (A) and (B) and compounding component (C) in the mixture. In the former procedure, the premixing of components (A) and (C) may be assisted by heat treatment at a temperature of at least 100°C, especially 120 to 180°C, although the heat treatment is not always necessary. Mixing of component (B) should preferably be performed in a substantially anhydrous atmosphere.

### EXAMPLE

Examples and Comparative Examples are given below for further illustrating the invention although the invention is not limited thereto. All parts are by weight. The viscosity is a measurement at 25°C by a rotational viscometer. The water content of silica is determined from the difference between the weight of silica at 25°C and the weight of silica after 110°C/2 hour heat treatment

### Example 1

A composition was prepared by intimately mixing 100 parts of α,ω-dihydroxydimethylpolysiloxane having a viscosity of 1,500 mm²/s with 10 parts of wet silica having a BET specific surface area of 175 m²/g, a BET/CTAB specific surface area ratio of 1.05 and a water content of 2.3% (Siloa 72X, Rhodia). The mixture was then admixed under vacuum with 15 parts of vinyltris(methylethylketoxime)silane and 1 part of γ-aminopropyltriethoxysilane until uniform.

The composition was held at 23°C and RH 50% for 7 days while it cured into a sheet of 2 mm thick. Rubber physical properties (hardness, elongation at break and tensile strength) of the sheet were measured according to JIS K6249, with the results shown in Table 1.

### Example 2

A composition was prepared as in Example 1 except that 10 parts of vinyltrimethoxysilane, 3 parts of tetratitanium butoxide and 0.5 part of γ-aminopropyltriethoxysilane were used instead of 15 parts of vinyltris(methylethylketoxime)-silane and 1 part of γ-aminopropyltriethoxysilane. After curing, rubber physical properties were measured.

### Example 3

A composition was prepared as in Example 1 except that 10 parts of vinyltris(isopropenoxy)silane and 0.5 part of γ-tetramethylguanidylpropyltrimethoxysilane were used instead of 15 parts of vinyltris(methylethylketoxime)silane. After curing, rubber physical properties were measured.

### Comparative Example 1

A composition was prepared as in Example 1 except that 10 parts of wet silica having a BET specific surface area of 205 m²/g, a BET/CTAB specific surface area ratio of 1.6 and a water content of 2.5% (dry Zeosil 132, Rhodia) were used instead of 10 parts of wet silica Siloa 72X. After curing, rubber physical properties were measured.

### Comparative Example 2

A composition was prepared as in Example 1 except that 10 parts of wet silica having a BET specific surface area of 205 m²/g, a BET/CTAB specific surface area ratio of 1.6 and a water content of 6% (Zeosil 132, Rhodia) were used instead of 10 parts of wet silica Siloa 72X. After curing, rubber physical properties were measured.

### Comparative Example 3

A composition was prepared as in Example 1 except that 10 parts of fumed silica having a BET specific surface area of 200 m²/g and a water content of 1.0% (Aerosil 200, Nippon Aerosil Co., Ltd.) were used instead of 10 parts of wet silica Siloa 72X. After curing, rubber physical properties were measured.

Note that physical properties were determined when the composition was just prepared (fresh) and after the composition was aged for 1 month and 6 months at room temperature. The fresh and aged compositions were examined for appearance by visual observation and finger touch and their viscosity measured.

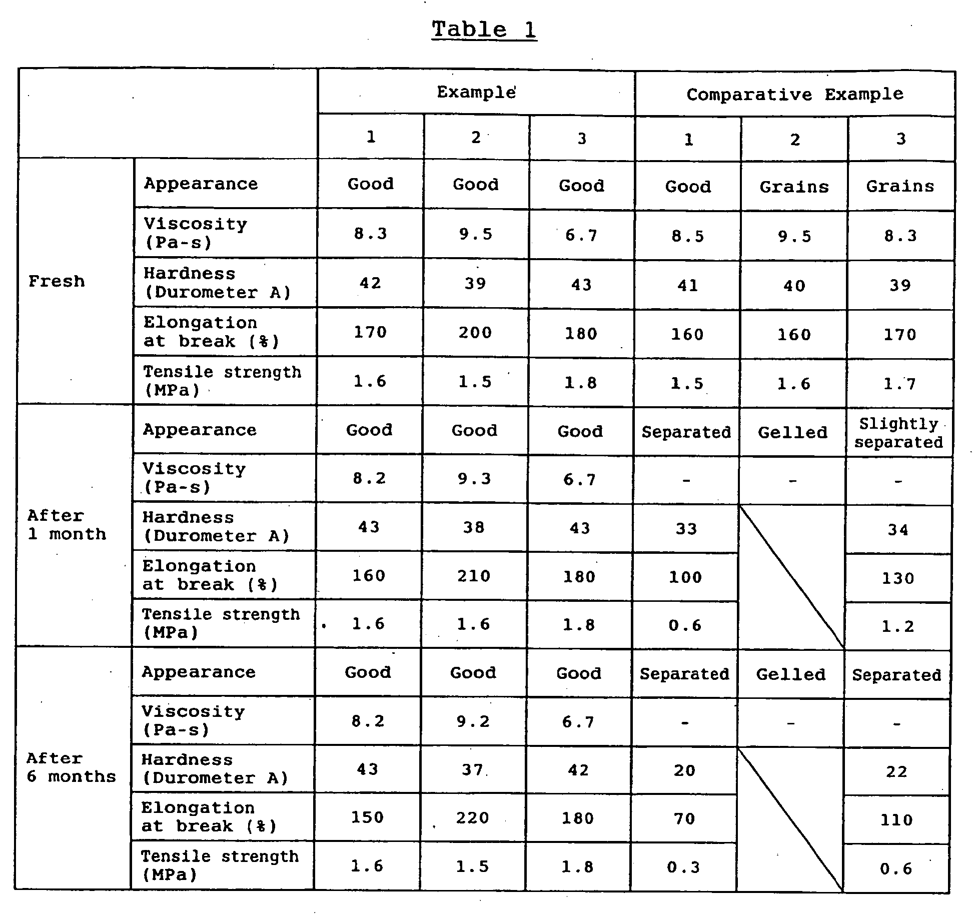

## Claims

1. A room temperature curable organopolysiloxane composition comprising
(A) 100 parts by weight of diorganopolysiloxane having at least two silicon-bonded hydroxyl or hydrolysable groups in a molecule,
(B) 0.5 to 30 parts by weight of silane having at least two hydrolysable groups in a molecule, and/or a partial hydrolytic condensate thereof, and
(C) 0.5 to 300 parts by weight of wet silica having a BET specific surface area of at least 50 m²/g, a BET specific surface area to CTAB specific surface area ratio of 1.0 to 1.3 and a water content, defined as the difference between the weight of the silica at 25°C and the weight thereof after a 2-hour treatment at 110°C, of up to 4%.

2. A composition of claim 1 wherein the diorganopolysiloxane (A) has the general formula (1) and/or (2): 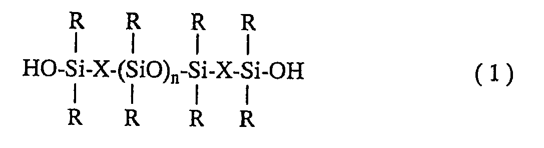 wherein R are substituted or unsubstituted monovalent hydrocarbon groups, X are oxygen atom or divalent hydrocarbon group of 1 to 8 carbon atoms, and n is such that the diorganopolysiloxane has a viscosity of 100 to 1,000,000 mm²/s at 25°C, as measured by a rotational viscometer; 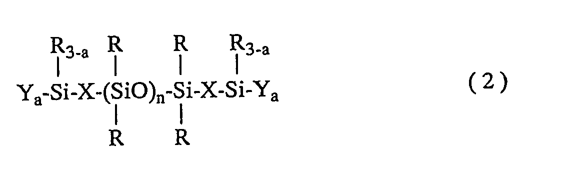 wherein R are substituted or unsubstituted monovalent hydrocarbon groups, X are oxygen atom or divalent hydrocarbon group of 1 to 8 carbon atoms, Y are hydrolysable groups, a is 2 or 3, and n is such that the diorganopolysiloxane has a viscosity of 100 to 1,000,000 mm²/s at 25°C, as measured by a rotational viscometer.

3. A composition of claim 1 or 2 wherein component (B) is a silane having the general formula (3):
R¹_{b}SiZ_{4-b} (3)
wherein R¹ is independently a substituted or unsubstituted monovalent hydrocarbon group of 1 to 6 carbon atoms, Z is independently a hydrolysable group, and b is an integer of 0 to 2, and/or a partial hydrolytic condensate thereof.

4. A composition of any one of claims 1 to 3 wherein the silica filler (C) is not chemically treated.

5. A composition of any one of claims 1 to 4 which is a coating compound.

6. A composition of any one of claims 1 to 4 wherein the composition is obtainable by mixing components (A), (B) and (C) without heat treatment.

7. A method of making an RTV organopolysiloxane composition, comprising mixing components (A), (B), (C) as defined in any one of claims 1 to 4.

8. A method according to claim 7 wherein components (A), (B) and (C) are mixed without heat treatment during manufacture.

9. A method according to claim 7 or claim 8 wherein component (C) is not chemically treated.

10. A method according to any one of claims 7 to 9 which method is a method of making a coating composition.

11. A method according to any one of claims 7 to 10 wherein components (A) and (C) are premixed and then component (B) is compounded in the mixture.

12. A method according to any one of claims 7 to 10 wherein components (A) and (B) are premixed and then component (C) is compounded in the mixture.

## Patentansprüche

1. Raumtemperaturhärtbare Organopolysiloxanzusammensetzung, umfassend:
(A) 100 Gewichtsteile Diorganopolysiloxan mit zumindest zwei siliciumgebundenen Hydroxyl- oder hydrolysierbaren Gruppen in einem Molekül,
(B) 0,5 bis 30 Gewichtsteile Silan mit zumindest zwei hydrolysierbaren Gruppen in einem Molekül und/oder ein partielles hydrolytisches Kondensat davon und
(C) 0,5 bis 300 Gewichtsteile nasses Silica mit einer spezifischen BET-Oberfläche von zumindest 50 m²/g, einem Verhältnis zwischen spezifischer BET-Oberfläche und spezifischer CTAB-Oberfläche von 1,0 bis 1,3 und einem Wassergehalt, der als Differenz zwischen dem Gewicht des Silica bei 25 °C und seinem Gewicht nach einer 2-stündigen Behandlung bei 110 °C definiert ist, von bis zu 4 %.

2. Zusammensetzung nach Anspruch 1, worin das Diorganopolysiloxan (A) die allgemeine Formel (1) und/oder (2) aufweist: 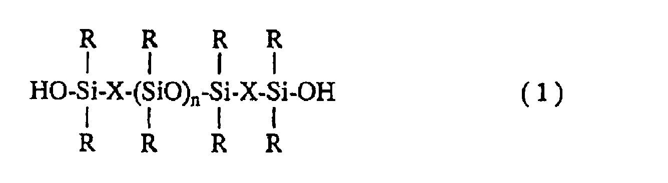 worin R substituierte oder unsubstituierte einwertige Kohlenwasserstoffgruppen sind, X ein Sauerstoffatom oder eine zweiwertige Kohlenwasserstoffgruppe mit 1 bis 8 Kohlenstoffatomen sind und n so definiert ist, dass das Diorganopolysiloxan eine Viskosität von 100 bis 1.000.000 mm²/s bei 25 °C aufweist, was mittels eines Drehviskosimeters gemessen wird; 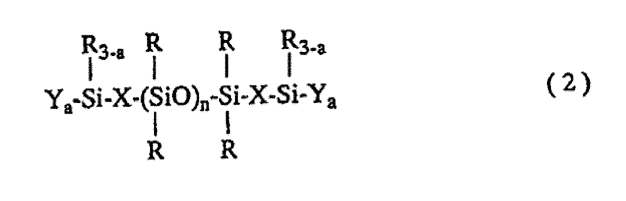 worin R substituierte oder unsubstituierte einwertige Kohlenwasserstoffgruppen sind, X ein Sauerstoffatom oder eine zweiwertige Kohlenwasserstoffgruppe mit 1 bis 8 Kohlenstoffatomen sind, Y hydrolysierbare Gruppen sind, a = 2 oder 3 ist und n so definiert ist, dass das Diorganopolysiloxan eine Viskosität von 100 bis 1.000.000 mm²/s bei 25 °C aufweist, was mittels eines Drehviskosimeters gemessen wird.

3. Zusammensetzung nach Anspruch 1 oder 2, worin die Komponente (B) ein Silan mit der allgemeinen Formel (3) ist:
R¹_{b}SiZ_{4-b} (3),
worin R¹ jeweils eine substituierte oder unsubstituierte einwertige Kohlenwasserstoffgruppe mit 1 bis 6 Kohlenstoffatomen ist, Z jeweils eine hydrolysierbare Gruppe ist und b eine ganze Zahl von 0 bis 2 ist, und/oder ein partielles hydrolytisches Kondensat davon ist.

4. Zusammensetzung nach einem der Ansprüche 1 bis 3, worin der Silicafüllstoff (C) nicht chemisch behandelt ist.

5. Zusammensetzung nach einem der Ansprüche 1 bis 4, wobei es sich um eine Überzugsverbindung handelt.

6. Zusammensetzung nach einem der Ansprüche 1 bis 4, worin die Zusammensetzung durch das Mischen der Komponenten (A), (B) und (C) ohne Wärmebehandlung erhältlich ist.

7. Verfahren zur Herstellung einer RTV-Organopolysiloxanzusammensetzung, das das Mischen der Komponenten (A), (B) und (C) wie in einem der Ansprüche 1 bis 4 definiert umfasst.

8. Verfahren nach Anspruch 7, worin die Komponenten (A), (B) und (C) ohne Wärmebehandlung während der Herstellung vermischt werden.

9. Verfahren nach Anspruch 7 oder Anspruch 8, worin Komponente (C) nicht chemisch behandelt wird.

10. Verfahren nach einem der Ansprüche 7 bis 9, wobei es sich um ein Verfahren zur Herstellung einer Überzugszusammensetzung handelt.

11. Verfahren nach einem der Ansprüche 7 bis 10, worin die Komponenten (A) und (C) vorgemischt werden und dann die Komponente (B) in das Gemisch eingemischt wird.

12. Verfahren nach einem der Ansprüche 7 bis 10, worin die Komponenten (A) und (B) vorgemischt werden und dann die Komponente (C) in das Gemisch eingemischt wird.

## Revendications

1. Composition d'organopolysiloxane vulcanisable à la température ambiante comprenant
(A) 100 parties en poids d'un diorganopolysiloxane ayant au moins deux groupes hydrolysables ou hydroxyle liés au silicium par molécule,
(B) 0,5 à 30 parties en poids d'un silane ayant au moins deux groupes hydrolysables par molécule, et/ou un condensat hydrolytique partiel de celui-ci, et
(C) 0,5 à 300 parties en poids d'une silice humide ayant une surface spécifique BET d'au moins 50 m²/g, un rapport de la surface spécifique BET à la surface spécifique CTAB de 1,0 à 1,3 et une teneur en eau, définie par la différence entre le poids de la silice à 25°C et son poids après 2 heures de traitement à 110°C, allant jusqu'à 4 %.

2. Composition selon la revendication 1, dans laquelle le diorganopolysiloxane (A) répond aux formules générales (1) et/ou (2) : 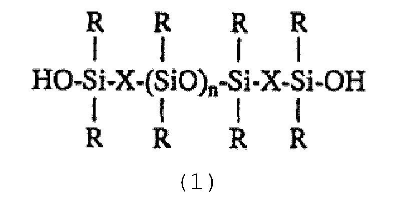 dans laquelle les R sont des groupes hydrocarbonés monovalents substitués ou non substitués, les X sont des atomes d'oxygène ou des groupes hydrocarbonés divalent ayant de 1 à 8 atomes de carbone, et n est tel que le diorganopolysiloxane ait une viscosité de 100 à 1 000 000 mm²/s à 25°C, telle que mesurée par un viscosimètre rotatif ; 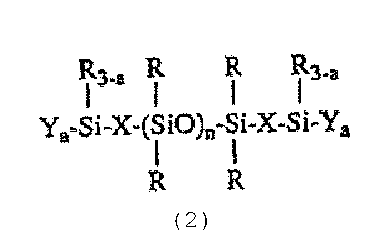 dans laquelle les R sont des groupes hydrocarbonés monovalents substitués ou non substitués, les X sont des atomes d'oxygène ou des groupes hydrocarbonés divalent ayant de 1 à 8 atomes de carbone, les Y sont des groupes hydrolysables, a vaut 2 ou 3, et n est tel que le diorganopolysiloxane ait une viscosité de 100 à 1 000 000 mm²/s à 25°C, telle que mesurée par un viscosimètre rotatif.

3. Composition selon la revendication 1 ou 2, dans laquelle le composant (B) est un silane de formule générale (3) :
R¹_{b}SiZ_{4-b} (3)
dans laquelle R¹ est indépendamment un groupe hydrocarboné monovalent substitué ou non substitué ayant de 1 à 6 atomes de carbone, Z est indépendamment un groupe hydrolysable, et b est un entier de 0 à 2, et/ou un condensat hydrolytique partiel de celui-ci.

4. Composition selon l'une quelconque des revendications 1 à 3, dans laquelle la charge de silice (C) n'est pas traitée chimiquement.

5. Composition selon l'une quelconque des revendications 1 à 4, qui est un composé de revêtement.

6. Composition selon l'une quelconque des revendications 1 à 4, laquelle composition peut être obtenue par mélange des composants (A), (B) et (C) sans traitement à la chaleur.

7. Procédé pour préparer une composition d'organopolysiloxane vulcanisable à la température ambiante (RTV), comprenant le mélange des composants (A), (B) et (C) tels que définis dans l'une quelconque des revendications 1 à 4.

8. Procédé selon la revendication 7, dans lequel les composants (A), (B) et (C) sont mélangés sans traitement à la chaleur durant la fabrication.

9. Procédé selon la revendication 7 ou la revendication 8, dans lequel le composant (C) n'est pas traité chimiquement.

10. Procédé selon l'une quelconque des revendications 7 à 9, lequel procédé est un procédé de production d'une composition de revêtement.

11. Procédé selon l'une quelconque des revendications 7 à 10, dans lequel les composants (A) et (C) sont prémélangés et ensuite le composant (B) est combiné dans le mélange.

12. Procédé selon l'une quelconque des revendications 7 à 10, dans lequel les composants (A) et (B) sont prémélangés et ensuite le composant (C) est combiné dans le mélange.
